# EUROPEAN PATENT APPLICATION

(11) **EP 4 465 433 A1**
(43) Date of publication of application: **20.11.2024**
(21) Application number: 23211100.5
(22) Date of filing: 21.11.2023
(51) Int. Cl.: H01M 50/502, H01M 50/244, H01M 50/289, H01M 50/503, H01M 50/507, H01M 50/516, H01M 50/519, H01M 50/569, H01M 10/48

(54) **SEPARATOR AND CELLS CONTACT SYSTEM**

(30) Priority: 18.05.2023 CN 202321228507 U
(71) Applicant: Jinko Energy Storage Technology Co., Ltd., Haining, Zhejiang 314415 (CN)
(72) Inventor: LI, Wei, Haining, 314415 (CN)
(74) Representative: Müller Schupfner & Partner Patent- und Rechtsanwaltspartnerschaft mbB (Muc)

(57) **Abstract**

The present disclosure relates to a separator and a cells contact system (CCS). The separator is configured to install a connector. The connector includes a first side surface and a second side surface opposite to each other, and the connector is further provided with buckle holes. The separator includes a body, buckles, first abutting portions, second abutting portions, and third abutting portions. The buckles are connected to the body, and the buckles are configured to be connected to the buckle holes. The first abutting portions are connected to the body, and the first abutting portions are configured to abut against the first side surface. The second abutting portions are connected to the body, and the second abutting portions are configured to abut against the second side surface. The third abutting portions are connected to the body, and the third abutting portions are configured to abut against an edge of the connector.

## Description

### TECHNICAL FIELD

The present disclosure relates to the technical field of battery module accessories, and in particular, to a separator and a cells contact system (CCS).

### BACKGROUND

A new energy power battery system is generally composed of a plurality of battery modules. A single battery module corresponds to a CCS. The CCS includes a connector (such as an aluminum bar) for electrical conduction, a separator, and a printed circuit board (PCB) or flexible printed circuit board (FPC) for low-voltage sampling.

In the related art, the separator of the CCS is manufactured by a hot-pressing film process. The connector, the separator, and the circuit board are connected together by hot pressing. Therefore, in the related art, an assembling process required by the CCS is relatively cumbersome and complicated, that is, assembly efficiency is low, leading to low manufacturing efficiency of the CCS.

### SUMMARY

The present disclosure provides a separator and a CCS, which requires a relatively simplified assembly process and can improve assembly efficiency and manufacturing efficiency.

In a first aspect, the present disclosure provides a separator, configured to install a connector, wherein the connector includes a first side surface and a second side surface opposite to each other, and the connector is further provided with buckle holes. The separator includes a body, buckles, first abutting portions, second abutting portions, and third abutting portions. The buckles are connected to the body, and the buckles are configured to be connected to the buckle holes. The first abutting portions are connected to the body, and the first abutting portions are configured to abut against the first side surface. The second abutting portions are connected to the body, and the second abutting portions are configured to abut against the second side surface. The third abutting portions are connected to the body, and the third abutting portions are configured to abut against an edge of the connector.

In one or more embodiments, the second abutting portions are connected to the third abutting portions to form step structures configured to abut against the connector.

In one or more embodiments, at least part of the buckles are configured to abut against the first side surface and/or the second side surface.

In one or more embodiments, the buckles are arranged at intervals on two sides of part of the first abutting portions, and part of the second abutting portions and part of the third abutting portions are arranged at intervals on sides of the buckles away from the first abutting portions.

In one or more embodiments, the second abutting portions are arranged at intervals on two sides of part of the buckles, and the first abutting portions and the third abutting portions are arranged at intervals on a same side of part of the buckles.

In one or more embodiments, the body is provided with a groove and a notch on each of two sides along a width direction of the body, wherein the groove is configured to place at least part of a wire harness, the notch is communicated with the groove, and the notch is configured for the wire harness to pass through the groove to the outside of the body.

In one or more embodiments, the separator further includes a first blocking portion, the first blocking portion is connected to the body, at least part of the first blocking portion is located in the groove, and the first blocking portion is configured to abut against the wire harness to limit the wire harness in the groove.

In one or more embodiments, the separator further includes a second blocking portion and a third blocking portion connected to the body and located in the groove, and along the width direction of the body, projections of the second blocking portion and the third blocking portion are corresponding to the notch. A structure of at least part of the second blocking portion is beeline-shaped, a structure of at least part of the third blocking portion is J-shaped, and both the second blocking portion and the third blocking portion are configured to abut against the wire harness, so that at least part of the wire harness is limited in the groove and disengagement of the wire harness from the notch is restricted.

In one or more embodiments, the body is provided with a groove and a boss, wherein the groove is configured to place at least part of a wire harness, and the boss protrudes from a bottom wall of the groove. The boss is provided with a first via hole along a height direction of the body, and the first via hole is configured for an electrolyte of a cell to pass through; and/or the boss is further provided with a cable tie hole, the cable tie hole is configured for a cable tie to pass through, and the cable tie is configured to bind the wire harness to the boss.

In a second aspect, the present disclosure provides a CCS. The CCS includes a connector, a wire harness, a cable tie, and the above separator. The connector is clamped with the separator, a terminal of the wire harness is connected to the connector, and the wire harness is bound to the separator through the cable tie. The CCS of the present disclosure has the above technical effect as described for the separator. Details are not described herein again.

It should be understood that the general description above and the detailed description in the following are merely exemplary, and cannot limit the present disclosure.

### BRIEF DESCRIPTION OF DRAWINGS

FIG. 1 is a schematic diagram of assembly of cells and a CCS according to some embodiments of the present disclosure;
FIG. 2 is a perspective view of a positive-electrode connector;
FIG. 3 is a perspective view of a negative-electrode connector;
FIG. 4 is a perspective view of an intermediate connector;
FIG. 5 is a side view of the positive-electrode connector;
FIG. 6 is a side view of the negative-electrode connector;
FIG. 7 is a side view of the intermediate connector;
FIG. 8 is a perspective view of a separator;
FIG. 9 is a side view of the separator;
FIG. 10 is a partial enlarged view of part A in FIG. 8;
FIG. 11 is a partial enlarged view of part B in FIG. 9;
FIG. 12 is a partial enlarged view of part C in FIG. 10;
FIG. 13 is a perspective view of the CCS;
FIG. 14 is a partial enlarged view of part D in FIG. 13; and
FIG. 15 is a side structural view of a second blocking portion, a third blocking portion, and a body, where dot-dash lines are used to indicate structural section lines.

The accompanying drawings herein, which are incorporated in and constitute a part of this specification, illustrate embodiments consistent with the present disclosure and, together with the specification, serve to explain principles of the present disclosure.

### DESCRIPTION OF EMBODIMENTS

In order to better understand the technical solutions of the present disclosure, embodiments of the present disclosure will be described in detail below in conjunction with the accompanying drawings.

It should be clear that the described embodiments are only some rather than all of the embodiments of the present disclosure. Based on the embodiments in the present disclosure, all other embodiments obtained by those of ordinary skill in the art without creative efforts fall within the protection scope of the present disclosure.

Terms used in the embodiments of the present disclosure are only for the purpose of describing specific embodiments, and are not intended to limit the present disclosure. Singular forms of "a/an", "the", and "said" used in the embodiments of the present disclosure and the appended claims are intended to include plural forms, unless otherwise clearly specified in the context.

It should be understood that the term "and/or" used herein describes an association relationship between associated objects and represents that three relationships may exist. For example, A and/or B may represent the following three cases: only A exists, both A and B exist, and only B exists. In addition, the character "/" herein generally indicates an "or" relationship between the associated objects.

It is to be noted that orientation terms such as "up", "down", "left", and "right" described in the embodiments of the present disclosure are described from the perspective shown in the accompanying drawings, and should not be construed as limiting the embodiments of the present disclosure. Besides, in this context, it is to be further understood that one element described as being connected "above" or "under" another element not only means that the element may be directly connected "above" or "under" the other element, but also means that the element may be indirectly connected "above" or "under" the other element through an intermediate element.

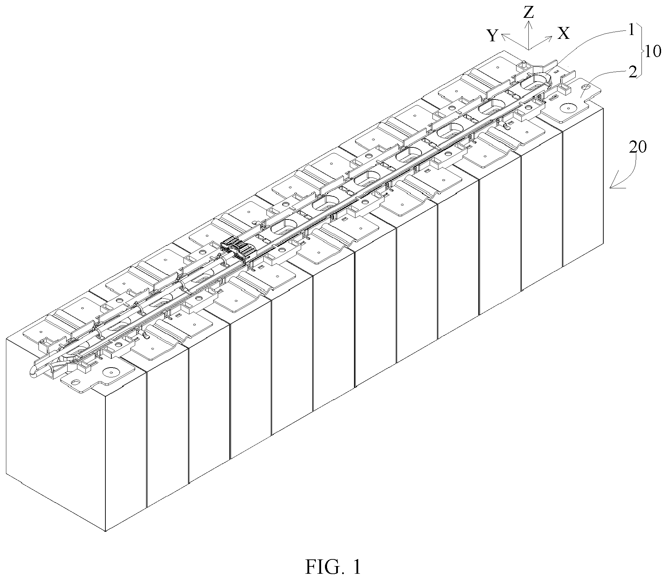

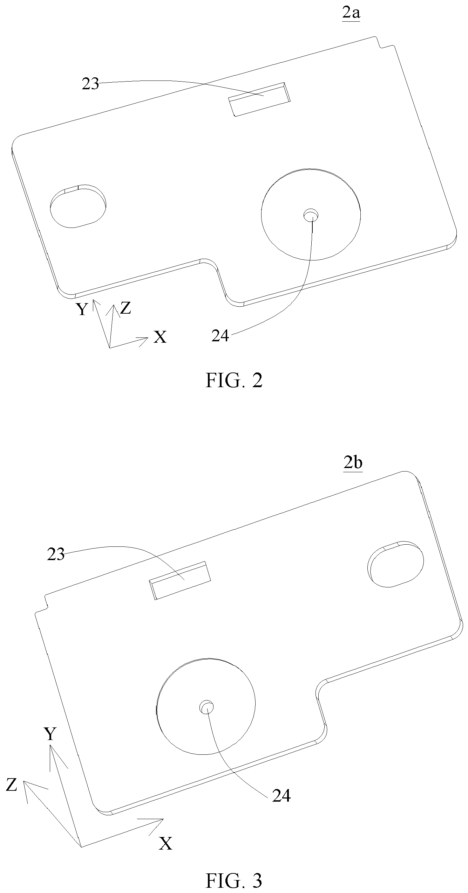

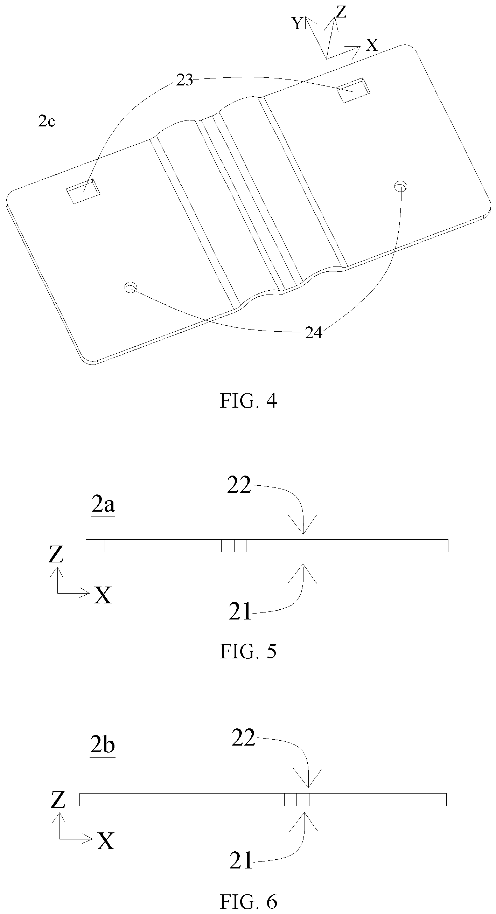

In a first aspect, some embodiments of the present disclosure provide a separator, which relates to the technical field of battery module assemblies. Referring to FIG. 1, the separator 1 may be configured to install a connector 2, the connector 2 is configured to be connected to the cells 20 for electrical conduction. The connector 2 may be made of at least one metal element selected from copper, nickel, iron, and aluminum. In the present disclosure, the connector 2 is introduced in the following mainly based on an aluminum-containing member. That is, the connector 2 may be an aluminum bar. The connector 2 may include a positive-electrode connector 2a as shown in FIG. 2, a negative-electrode connector 2b as shown in FIG. 2b, and an intermediate connector 2c as shown in FIG. 4. The positive-electrode connector 2a, the negative-electrode connector 2b, and the intermediate connector 2c may be configured to implement serial or parallel connection of at least two cells 20. The connection between the connector 2 and the cell 20 is introduced in the following mainly based on serial connection. For example, the positive-electrode connector 2a is connected to a positive electrode of a first cell 20, a negative electrode of the first cell 20 is connected to a positive electrode of a second cell 20 through a first intermediate connector 2c, a negative electrode of the second cell 20 is connected to a positive electrode of a third cell 20 through a second intermediate connector 2c, and so on, and a negative electrode of the last cell 20 is connected to the negative-electrode connector 2b, so as to form the serial connection of the cells 20. Referring to FIG. 5 to FIG. 7, the connector 2 includes a first side surface 21 and a second side surface 22 arranged opposite to each other, and the first side surface 21 and the second side surface 22 are used to limit and abut against the separator 1. Referring to FIG. 2 to FIG. 4, the connector 2 is further provided with a buckle hole 23 for connection to the separator 1. The connector 2 is further provided with a soldering observation hole 24, and the soldering observation hole 24 is configured to be soldered with the positive electrode and the negative electrode of the cell 20. The configuration of connection between the separator 1 and the connector 2 is mainly introduced in the following.

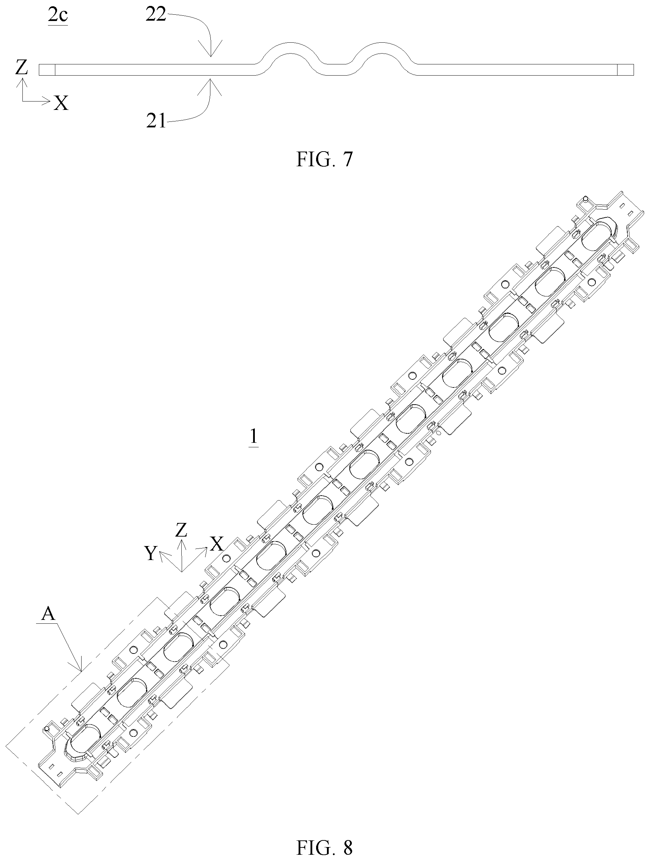

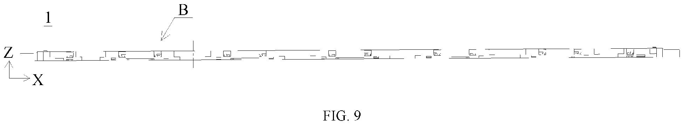

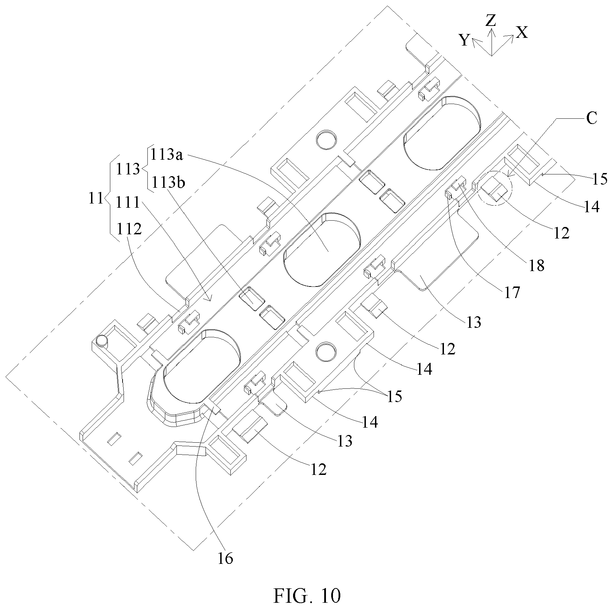

The separator 1 as shown in FIG. 8 to FIG. 9 includes a body 11, buckles 12, first abutting portions 13, second abutting portions 14, and third abutting portions 15 as shown in FIG. 10 to FIG. 11. The buckle 12 is connected to the body 11, and the buckle 12 is configured to be connected to the buckle hole 23 of the connector 2. The first abutting portion 13 is connected to the body 11, and the first abutting portion 13 is configured to abut against the first side surface 21 of the connector 2. The second abutting portion 14 is connected to the body 11, and the second abutting portion 14 is configured to abut against the second side surface 22 of the connector 2. The third abutting portion 15 is connected to the body 11, and the third abutting portion 15 is configured to abut against an edge of the connector 2.

In some embodiments, when there is a need to connect the connector 2 as shown in FIG. 5 to FIG. 7 to the separator 1 as shown in FIG. 10 to FIG. 11, first, the first side surface 21 of the connector 2 abuts against the first abutting portion 13 of the separator 1, the second side surface 22 of the connector 2 abuts against the second abutting portion 14 of the separator 1, and the edge of the connector 2 abuts against an edge of the separator 1 at the same time. In this way, various parts of the connector 2 are limited by the structure of the separator 1. Then, the limited connector 2 is pushed close to the separator 1 until the buckle 12 of the separator 1 is connected into the buckle hole 23 of the connector 2, thereby restricting disengagement of the connector 2 from the separator 1. In this case, a stable connection between the separator 1 and the connector 2 is completed. Correspondingly, when there is a need to disassemble the connector 2 from the separator 1, there is only a need to separate the buckle 12 from the buckle hole 23. Compared with the separator in the related art, the connection structure of the separator 1 in the present disclosure enables an assembly process required for the separator 1 and the connector 2 to be relatively simplified, which has higher efficiency during assembling, and can save assembling time. In addition, the connection structure of the separator 1 in the present disclosure enables a disassembly process required for the separator 1 and the connector 2 to also be relatively simplified, which has higher efficiency during the disassembly, and also facilitates maintenance or replacement of parts in a subsequent stage.

Further, since the first side surface 21 and the second side surface 22 are two opposite side surfaces of the connector 2, the first abutting portion 13 abutting against the first side surface 21 and the second abutting portion 14 abutting against the second side surface 22 are also oppositely arranged. That is, the first abutting portion 13 and the second abutting portion 14 exert limiting force on the connector 2 along a thickness direction Z of the connector 2. The third abutting portion 15 abutting against the edge of the connector 2 exert limiting force on the connector 2 along a direction perpendicular to the thickness direction Z of the connector 2. In this way, when the connector 2 bears an external force load, the connector 2 will generate less force on the buckle 12 of the separator 1, and the buckle 12 is less likely to be damaged by the external force load. Therefore, the connection structure of the separator 1 in the present disclosure has higher operation reliability.

Referring to FIG. 10, the body 11 has a long and narrow strip structure. The buckles 12, the first abutting portions 13, the second abutting portions 14, and the third abutting portions 15 are provided on side walls on two sides of the body 11, so that the connectors 2 may be installed on the two sides of the body 11.

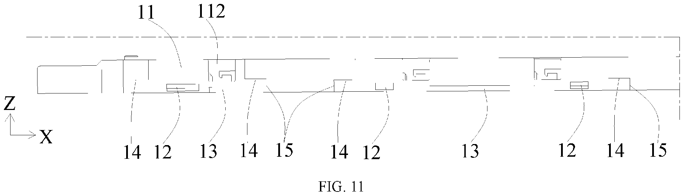

In some embodiments, referring to FIG. 11, the second abutting portion 14 abuts against the third abutting portion 15, to form a step structure configured to abut against the connector 2. In this way, the step structure formed by connecting the second abutting portion 14 and the third abutting portion 15 has higher structural stability, and the step on the connector 2 has a higher degree of limiting reliability, which reduces possibility of disengagement of the buckle 12 from the buckle hole 23. That is, in the present disclosure, the structure in the separator 1 configured to be connected to the connector 2 has higher operation reliability.

The second abutting portion 14 and the third abutting portion 15 may form a stepped structure by integral molding, for example, injection molding. Correspondingly, the second abutting portion 14, the third abutting portion 15, and the body 11 may also be connected by integral molding.

In some embodiments, referring to FIG. 11 to FIG. 12, at least part of the buckle 12 is configured to abut against the first side surface 21 as shown in FIG. 5 to FIG. 7. That is, at least part of the buckle 12 can cooperate with the first abutting portion 13 to exert limiting force on the connector 2 along the thickness direction Z of the connector 2.

In some embodiments (not shown in the figures), at least part of the buckle 12 is configured to abut against the second side surface 22. That is, at least part of the buckle 12 can cooperate with the second abutting portion 14 to exert limiting force on the connector 2 along the thickness direction Z of the connector 2.

In some embodiments (not shown in the figures), when the separator 1 includes two oppositely arranged buckles 12, at least part of one buckle 12 is configured to abut against the first side surface 21, and at the same time, at least part of the other buckle 12 is configured to abut against the second side surface 22, so as to exert limiting force on the connector 2 along the thickness direction Z of the connector 2.

In the following embodiments, the introduction is mainly based on an example in which at least part of the buckle 12 is configured to abut against the first side surface 21.

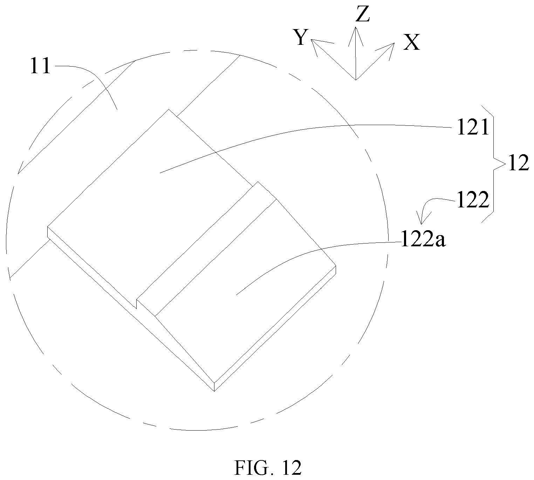

Referring to FIG. 12, the buckle 12 includes a connecting segment 121 and a clamping segment 122, the clamping segment 122 is connected to the body 11 through the connecting segment 121, the connecting segment 121 can abut against the first side surface 21, and at least part of the clamping segment 122 can extend into the buckle hole 23 and abut against a side wall of the buckle hole 23. The clamping segment 122 may have a slope 122a inclined relative to the connecting segment 121. When the slope 122a abuts against the edge of the connector 2, the edge of the connector 2 can smoothly slide relative to the slope 122a, so that the connecting segment 121 is deformed. When the clamping segment 122 moves to a position of the buckle hole 23 relative to a surface of the connector 2, the clamping segment 122 extends into the buckle hole 23 under internal stress of the connecting segment 121.

In other embodiments (not shown in the figures), the clamping segment 122 may have a convex arc surface, and the arc surface may be clamped with the buckle hole 23 of the connector 2.

In addition, the buckle 12 may be connected to the body 11 by integral molding.

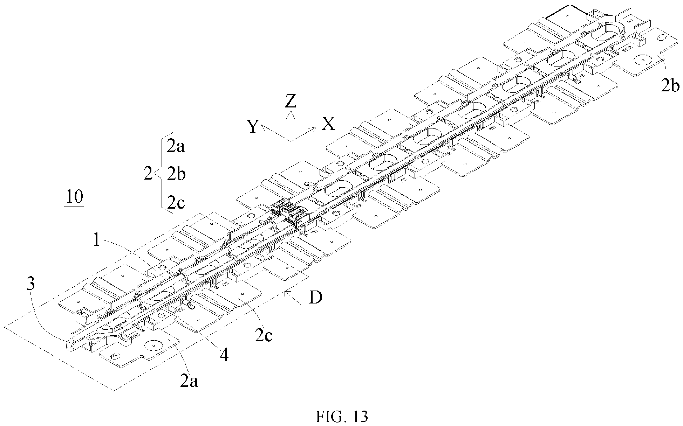

In the above embodiments, referring to FIG. 13, the first abutting portion 13 has a flat plate structure, and the first abutting portion 13 may be connected to the body 11 by integral molding.

Since the positive-electrode connector 2a, the intermediate connector 2c, and the negative-electrode connector 2b have different structures, connection structures in the separator 1 matching the three connectors 2 are also different. The relevant structures will be introduced in detail in the following.

In some embodiments, referring to FIG. 11, the buckles 12 are arranged at intervals on two sides of part of the first abutting portions 13, and part of the second abutting portions 14 and part of the third abutting portions 15 are arranged at intervals on sides of the buckles 12 away from the first abutting portions 13.

Referring to FIG. 11, the buckles 12 are arranged at intervals on two sides of the first abutting portion 13. That is, the buckles 12 are arranged symmetrically with respect to the first abutting portion 13. The second abutting portion 14 and the third abutting portion 15 are arranged at intervals on a side of each buckle 12 away from the first abutting portion 13. That is, the second abutting portions 14 and the third abutting portions 15 are also arranged symmetrically with respect to the first abutting portion 13. Correspondingly, the first side surface 21 of the connector 2 may be limited by a single first abutting portion 13, each of two ends of the second side surface 22 of the connector 2 may be limited by a respective second abutting portion 14, and each of two oppositely arranged edges of the connector 2 may be limited by a respective third abutting portion 15. The connector 2 is provided with two buckle holes 23. Each of the two buckle holes 23 may be connected to one buckle 12. In this way, the separator 1 on the connector 2 has a higher degree of limiting reliability, and the structure in the separator 1 connected to the connector 2 has higher stability. Since the intermediate connector 2c is configured to be connected to two cells 20, the intermediate connector 2c may need to bear a larger external force load. Therefore, the structural configuration is more applicable to the connection between the separator 1 and the intermediate connector 2c.

In some embodiments, referring to FIG. 11, the second abutting portions 14 are arranged at intervals on two sides of part of the buckles 12, and the first abutting portion 13 and the third abutting portion 15 are arranged at intervals on same sides of part of the buckles 12. Since the positive-electrode connector 2a is connected to a single cell 20, the external force load born by the positive-electrode connector 2a is less. In this way, the structural configuration is more applicable to the connection between the separator 1 and the positive-electrode connector 2a. Similarly, since the negative-electrode connector 2b is configured to be connected to a single cell 20, the external force load borne by the negative-electrode connector 2b is less. In this way, the structural configuration is more applicable to the connection between the separator 1 and the negative-electrode connector 2b.

The structures of the separator 1 for connection to the positive-electrode connector 2a and the negative-electrode connector 2b are located at two ends of a side wall on a same side of the body 11.

Referring to FIG. 13, a wire harness 3 may be further installed on the separator 1.

In some embodiments, referring to FIG. 10, the body 11 is provided with a groove 111 and a notch 112 on each of two sides along a width direction Y of the body 11, the groove 111 is configured to place at least part of the wire harness 3, the notch 112 is communicated with the groove 111, and the notch 112 is configured for the wire harness 3 to pass through the groove 111 to the outside of the body 11.

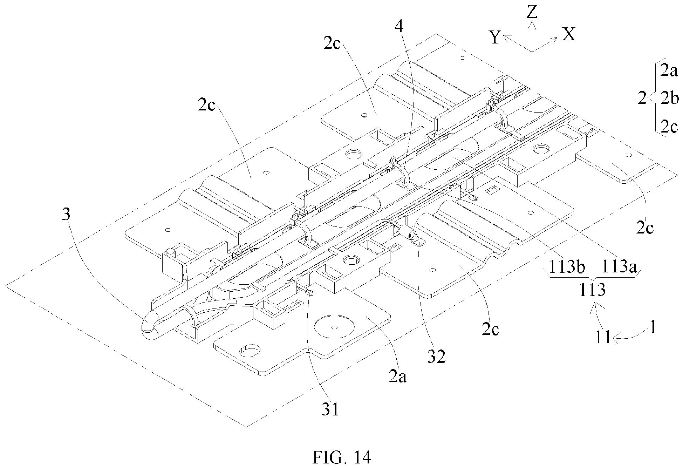

Referring to FIG. 14, the wire harness 3 is configured to collect a voltage and/or temperature signal of the connector 2. At least part of the wire harness 3 may be placed in the groove 111 of the body 11 shown in FIG. 10, and then the wire harness 3 in the groove 111 may extend from the notch 112 to the outside of the body 11, so as to be connected to the connector 2. Through the arrangement of the groove 111 and the notch 112, on the one hand, at least part of the wire harness 3 can be protected by the separator 1, and the risk of damages to the wire harness 3 by a foreign object can be reduced. On the other hand, compactness of the assembly structure of the separator 1 and the wire harness 3 can be improved, and an installation space can be saved.

Referring to FIG. 14, terminals of the wire harness 3 may include a voltage sampling terminal 31 and a temperature sampling terminal 32.

In some embodiments, referring to FIG. 10, the separator 1 further includes a first blocking portion 16 connected to the body 11, and at least part of the first blocking portion 16 is located in the groove 111. The first blocking portion 16 is configured to abut against the wire harness 3 to limit the wire harness 3 in the groove 111. In this way, the structure in the separator 1 configured to install the wire harness 3 is relatively simplified, and when the separator 1 and the wire harness 3 are assembled and disassembled, the necessary operation is less difficult and the operation efficiency is higher.

The first blocking portion 16 may be integrally formed with the body 11, for example, by injection molding.

In addition, the first blocking portion 16 has a strip structure, and the first blocking portion 16 extends from one side wall of the groove 111 to another side wall of the groove 111, but a length dimension of the first blocking portion 16 is less than a width dimension of the groove 111.

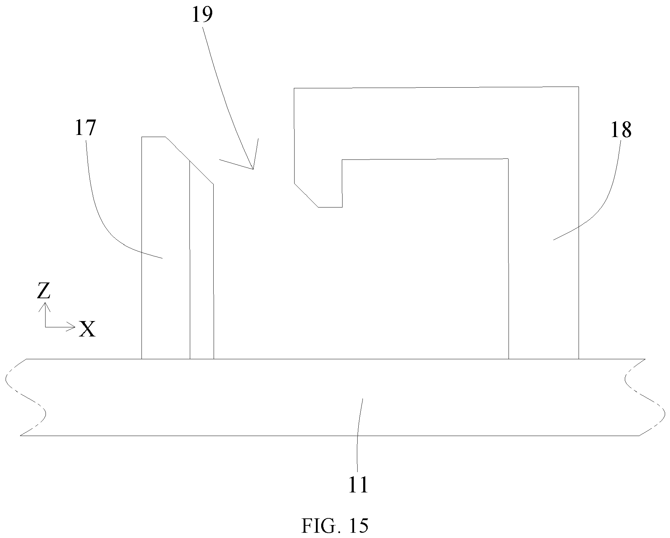

In some embodiments, referring to FIG. 10, the separator 1 further includes a second blocking portion 17 and a third blocking portion 18 connected to the body 11 and located in the groove 111, and along the width direction Y of the body 11, projections of the second blocking portion 17 and the third blocking portion 18 are corresponding to the notch 112. As shown in FIG. 15, a structure of at least part of the second blocking portion 17 is beeline-shaped, a structure of at least part of the third blocking portion 18 is J-shaped. Both the second blocking portion 17 and the third blocking portion 18 are configured to abut against the wire harness 3, so that at least part of the wire harness 3 is limited in the groove 111 and disengagement of the wire harness 3 from the notch 112 is restricted.

Referring to FIG. 10, part of the wire harness 3 placed in the groove 111 is required to extend through the notch 112 to the outside of the body 11, so that the wire harness 3 can be connected to the connector 2. Correspondingly, the wire harness 3 passing through the notch 112 is in a bent state, and under internal stress of the wire harness 3, the wire harness 3 may be disengaged from the notch 112. Projected along the width direction Y of the body 11, the positions of the second blocking portion 17 and the third blocking portion 18 correspond to the notch 112, the second blocking portion 17 and the third blocking portion 18 are configured to block the wire harness 3 to restrict disengagement of the wire harness 3 from the notch 112 and reduce the possibility of contact of the wire harness 3 with an external object. That is, the possibility that the wire harness 3 is pulled by the external object so that the wire harness 3 is separated from the connector 2 can be reduced. The second blocking portion 17 and the third blocking portion 18 are arranged at intervals, and an opening 19 for the wire harness 3 to pass through is formed between the second blocking portion 17 and the third blocking portion 18. Referring to FIG. 15, when the wire harness 3 enters a semi-enclosed space of the second blocking portion 17 and the third blocking portion 18 through the opening 19, since the structure of at least part of the second blocking portion 17 is beeline-shaped and the structure of at least part of the third blocking portion 18 is J-shaped, the wire harness 3 can be limited by the second blocking portion 17 and the third blocking portion 18. That is, at least part of the wire harness 3 is limited in the groove 111 and disengagement of the wire harness 3 from the notch 112 is restricted.

Structures and sizes of the second blocking portion 17 and the third blocking portion 18 may be correspondingly configured according to the thickness of the wire harness 3 required to be assembled, so that the second blocking portion 17 and the third blocking portion 18 may stably limit the wire harness 3 required to be assembled.

In addition, both the second blocking portion 17 and the third blocking portion 18 extend upwards from a bottom wall of the groove 111, and the second blocking portion 17, the third blocking portion 18, and the body 11 are connected by integral molding.

In some embodiments, referring to FIG. 10, the body 11 is provided with a groove 111 and a boss 113, the groove 111 is configured to place at least part of the wire harness 3, and the boss 113 protrudes from the bottom wall of the groove 111. The boss 113 is provided with a first via hole 113a along a height direction Y of the body 11, and the first via hole 113a is configured for the electrolyte of the cell 20 to pass through. Since the groove 111 has been described above, the details are not described herein again. The first via hole 113a is configured for the electrolyte of the cell 20 in a thermal runaway state, which reduces the risk of explosion due to excessive pressure inside the cell 20.

The set quantity of the first via holes 113a matches the quantity of the cells 20 to be connected.

In some embodiments, referring to FIG. 10, the body 11 is provided with a groove 111 and a boss 113, the groove 111 is configured to place at least part of the wire harness 3, and the boss 113 protrudes from the bottom wall of the groove 111. The boss 113 is further provided with a cable tie hole 113b. The cable tie hole 113b is configured for a cable tie 4 to pass through, and the cable tie 4 is configured to bind the wire harness 3 to the boss 113, so that the wire harness 3 is relatively stable relative to the separator 1, which facilitates subsequent transportation and soldering operations. In addition, in this way, during the assembly operation and disassembly operation, the corresponding operation is less difficult and the operation efficiency is higher.

The boss 113 may be provided with a plurality of cable tie holes 113b, and a user may select, according to the length of the wire harness 3 to be bound, the quantity of the cable tie holes 113b required to be connected.

In addition, the cable tie hole 113b may alternatively be arranged on the bottom wall of the groove 111.

In the above embodiments, referring to FIG. 10, the body 11 is provided with two grooves 111 extending along a length direction X. One end of one groove 111 is communicated with one corresponding end of the other groove 111, which facilitates convergence of the wire harness 3 located in the two grooves 111 into strands. The other end of one groove 111 is also connected to the corresponding end of the other groove 111, which also facilitates the convergence of the wire harness 3 located in the two grooves 111 into strands.

In some embodiments, an overall structure of the separator 1 may be integrally formed by injection molding.

In a second aspect, some embodiments of the present disclosure provide a CCS. Referring to FIG. 13 to FIG. 14, the CCS 10 includes the separator 1, the connector 2, the wire harness 3, and the cable tie 4 described above. The connector 2 is clamped with the separator 1, a terminal of the wire harness 3 is connected to the connector 2, and the wire harness 3 is bound to the separator 1 through the cable tie 4. The CCS 10 may have the same technical effect as described in the above embodiments. Details are not described herein again.

Compared with the CCS in the related art, the wire harness 3 in the CCS 10 in the present disclosure is flexible, the wire harness 3 can effectively absorb extrusion stress of the expanded cell 20, and thus the anti-vibration capability of the wire harness 3 is higher.

The above descriptions are only preferred embodiments of the present disclosure, and are not intended to limit the present disclosure. For those skilled in the art, various modifications and changes may be made to the present disclosure. The scope of the present disclosure is defined by the appended claims.

## Claims

1. A separator, configured to install connectors, wherein the connector comprises a first side surface and a second side surface opposite to each other, and the connector is further provided with buckle holes, wherein the separator comprises:
a body;
buckles connected to the body, wherein the buckles are configured to be connected to the buckle holes;
first abutting portions connected to the body, wherein the first abutting portions are configured to abut against the first side surface;
second abutting portions connected to the body, wherein the second abutting portions are configured to abut against the second side surface; and
third abutting portions connected to the body, wherein the third abutting portions are configured to abut against an edge of the connector.

2. The separator according to claim 1, wherein the second abutting portions are connected to the third abutting portions to form step structures configured to abut against the connector.

3. The separator according to claim 1, wherein at least part of the buckles are configured to abut against the first side surface.

4. The separator according to claim 1, wherein at least part of the buckles are configured to abut against the second side surface.

5. The separator according to claim 1, wherein the buckles are arranged at intervals on two sides of part of the first abutting portions, and part of the second abutting portions and part of the third abutting portions are arranged at intervals on sides of the buckles away from the first abutting portions.

6. The separator according to claim 1, wherein the second abutting portions are arranged at intervals on two sides of part of the buckles.

7. The separator according to claim 1, wherein the first abutting portions and the third abutting portions are arranged at intervals on a same side of part of the buckles.

8. The separator according to any one of claims 1 to 7, wherein the body is provided with a groove and a notch on each of two sides along a width direction of the body, wherein the groove is configured to place at least part of a wire harness, the notch is communicated with the groove, and the notch is configured for the wire harness to pass through the groove to the outside of the body.

9. The separator according to claim 8, further comprising a first blocking portion, wherein the first blocking portion is connected to the body, at least part of the first blocking portion is located in the groove, and the first blocking portion is configured to abut against the wire harness to limit the wire harness in the groove.

10. The separator according to claim 8, further comprising a second blocking portion and a third blocking portion connected to the body and located in the groove, wherein along the width direction of the body, projections of the second blocking portion and the third blocking portion are corresponding to the notch.

11. The separator according to claim 10, wherein a structure of at least part of the second blocking portion is beeline-shaped, a structure of at least part of the third blocking portion is J-shaped, and both the second blocking portion and the third blocking portion are configured to abut against the wire harness, so that at least part of the wire harness is limited in the groove and disengagement of the wire harness from the notch is restricted.

12. The separator according to any one of claims 1 to 7, wherein the body is provided with a groove and a boss, wherein the groove is configured to place at least part of a wire harness, and the boss protrudes from a bottom wall of the groove.

13. The separator according to claim 12, wherein the boss is provided with a first via hole along a height direction of the body, and the first via hole is configured for an electrolyte of a cell to pass through.

14. The separator according to claim 12, wherein the boss is further provided with a cable tie hole, the cable tie hole is configured for a cable tie to pass through, and the cable tie is configured to bind the wire harness to the boss.

15. A cells contact system (CCS), comprising:
the separator according to any one of claims 1 to 14;
a connector clamped with the separator;
a wire harness, wherein a terminal of the wire harness is connected to the connector; and
a cable tie, wherein the wire harness is bound to the separator through the cable tie.
